# EUROPÄISCHE PATENTSCHRIFT

(11) **EP 2 680 497 B1**
(45) Veröffentlichungstag und Bekanntmachung des Hinweises auf die Patenterteilung: **01.04.2015**
(21) Anmeldenummer: 13075045.8
(22) Anmeldetag: 28.06.2013
(51) Int. Cl.: H04L 12/28, H04L 29/06

(54) **Externer Zugriff auf IP-basierte Haussteuereinheit in lokalem Netzwerk**
External access to IP-based house control unit in a local network
Accès externe à une unité de commande domestique basée sur IP dans un réseau local

(30) Priorität: 28.06.2012 DE 102012105698
(43) Veröffentlichungstag der Anmeldung: 01.01.2014
(73) Patentinhaber: Deutsche Telekom AG, 53113 Bonn (DE)
(72) Erfinder: Kraft, Andreas, 14129 Berlin (DE); Gorgas, Dagmar, 13629 Berlin (DE); Helmut, Vivien, 12309 Berlin (DE); Sayegh, Andreas, 10437 Berlin (DE); Merrall, Simon, 10178 Berlin (DE)
(74) Vertreter: Nern, Peter-Michael

(56) Entgegenhaltungen:
- EP-A1- 1 575 230
- EP-A1- 1 978 678
- DE-A1-102009 060 469

## Beschreibung

Die Erfindung betrifft eine Lösung, die es ermöglicht, von externer Seite auf eine Haussteuereinheit zuzugreifen, welche in einem lokalen Netzwerk hinter einer Zugangseinrichtung zu einem öffentlichen Netz, beispielsweise einem Router für den Zugang zum Internet, angeordnet ist. Sie bezieht sich auf die Möglichkeit eines zeitlich durchgehenden Zugriffs auf eine entsprechende Haussteuereinheit, um über diese elektronische Einheiten und Geräte der Haustechnik mittels externer, das heißt selber nicht zu dem lokalen Netz mit der Haussteuereinheit gehörender Einrichtungen zu steuern und/oder deren Betriebszustände in Form von Statusinformationen abzufragen. Die Erfindung hat ein dies ermöglichendes Verfahren und eine entsprechende Anordnung zum Gegenstand.

Seit einiger Zeit vollzieht sich eine Entwicklung, die darauf gerichtet ist, Hausund Gebäudetechnik als Teil lokaler Netzwerke von entfernter Stelle, das heißt von externer Seite, steuern zu können. Hierfür beispielhaft genannt seien die Möglichkeiten der Steuerung von Rollläden oder von Geräten der Unterhaltungstechnik von unterwegs durch die Mieter einer entsprechend ausgestatteten Wohnung beziehungsweise durch die Bewohner eines Hauses. Derartige Möglichkeiten tragen sowohl dem Wunsch nach Komforterhöhung als auch den Sicherheitsbedürfnissen der Menschen Rechnung, setzen aber in jedem Falle voraus, dass zumindest die IP-Adresse des Routers bekannt sein muss, über welchen entsprechende Einheiten und Geräte der Haustechnik an das Internet angebunden sind, um diese steuern oder Statusangaben von ihnen abfragen zu können.

Innerhalb (privater) lokaler Netzwerke (LAN) hat in der Regel jede in ein solches LAN eingebundene Einheit eine private IP-Adresse. Bei privaten IP-Adressen handelt es sich um spezielle Adressbereiche in dem zur Verfügung stehenden IP-Adressraum, die ausschließlich für die Nutzung in lokalen Netzwerken vorgesehen sind und in öffentlichen Netzen, wie dem Internet, nicht verwendet werden.

Für Einrichtungen und Einheiten öffentlicher Netze tritt ein lokales Netzwerk lediglich über eine der Zugangseinrichtung zum öffentlichen Netz zugeteilte öffentliche IP-Adresse in Erscheinung. Die privaten IP-Adressen der in dem lokalen Netzwerk angeordneten Einheiten und Geräte sind hingegen den Einrichtungen des öffentlichen Netzes, also insbesondere des Internets, nicht bekannt. In den weiteren Erläuterungen wird bezüglich der Zugangseinrichtung zum öffentlichen Netz im Allgemeinen von einem Router ausgegangen, ohne dass die Gegenstände der Patentansprüche hierdurch in entsprechender Weise beschränkt wären, wobei die insoweit zu dem Router getroffenen Aussagen entsprechend für Zugangseinrichtungen allgemein gelten. Betreffend das öffentliche Netz wird in den weiteren Darstellungen, ebenfalls ohne Beschränkung der mit den Patentansprüchen beanspruchten Gegenstände, im Allgemeinen vom Internet ausgegangen, wobei die zum Internet getroffenen Aussagen adäquat für öffentliche IP-basierte Netze allgemein gelten.

Um einem IP-basierten Gerät den Zugang zum Internet zu ermöglichen, wird dessen innerhalb des lokalen Netzwerks gültige private IP-Adresse unter Nutzung des NAT-Mechanismus (Network Address Translation) von dem für den Internetzugang genutzten Router gewissermaßen in eine öffentliche Adresse übersetzt. Der Router führt hierzu eine interne Tabelle, mittels welcher für ein Gerät des lokalen Netzwerks bestimmte Datenpakete aus dem Internet, also Antwortdaten, dem für ihren Empfang vorgesehenen Gerät auf dessen private Adresse durch den Router zugeleitet werden.

Allerdings besteht das Problem, dass den meisten für den Internetzugang genutzten Routern lediglich eine dynamische, das heißt eine temporär gültige, sich gegebenenfalls ändernde IP-Adresse für das öffentliche Netz zugeordnet wird. So erfolgt in der Regel zumindest bei Privathaushalten eine regelmäßige Zwangstrennung der dauerhaften DSL-Verbindung ins Internet, mit der Folge, dass dem Router gegebenenfalls nach dem Wiederaufbau der DSL-Verbindung zumeist eine neue öffentliche IP-Adresse zugeordnet wird. Wegen der sich gegebenenfalls ändernden öffentlichen IP-Adresse, über welche ein lokales Netzwerk im Internet in Erscheinung tritt, ist es nicht ohne Weiteres möglich, von externer Seite, beispielsweise mittels eines dafür vorgesehenen Servers eines Dienstleisters, auf Einheiten oder Geräte in einem lokalen Netzwerk zuzugreifen.

Eine mögliche Lösung für das Problem der sich dynamisch ändernden IP-Adressen bietet das dynamische DNS. Hierbei handelt es sich bekanntermaßen um einen Dienst, durch welchen auf einem Server in einer Tabelle für einen festen Host- beziehungsweise Netzwerknamen, die so genannte DynDNS-Adresse, die dem betreffenden Host beziehungsweise dem Netzwerk jeweils aktuell zugeordnete öffentliche IP-Adresse verwaltet wird. Der Router, über den ein lokales Netzwerk an das Internet angebunden ist, meldet dazu nach einer Zwangstrennung und der erneuten Herstellung einer Verbindung zum Internet die ihm aktuell zugeteilte öffentliche IP-Adresse an den vorgenannten Server (DynDNS-Server) des dynamischen DNS-Dienstes. Soll nun der betreffende Router beziehungsweise das von ihm verwaltete lokale Netzwerk von externer Seite angesprochen werden, so muss eine Einrichtung, mittels welcher der Zugriff auf das lokale Netzwerk über das Internet erfolgen soll, zunächst die aktuelle öffentliche IP-Adresse des lokalen Netzwerkes mittels dessen bekannter DynDNS-Adresse bei dem DynDNS-Server abfragen. Erst dann ist mittels der durch die Abfrage erhaltenen IP-Adresse der Zugriff auf das lokale Netzwerk ermöglicht. Ein Nachteil dieser Lösung ist dabei auch darin zu sehen, dass der Betreiber eines lokalen Netzwerks sich zunächst bei dem die DynDNS-Adressen verwaltenden Dienstbetreiber anmelden und dabei diesem, also einem Dritten, den Host- beziehungsweise Netzwerknamen seines lokalen, das heißt privaten Netzwerks bekanntgeben muss.

Als weitere Möglichkeit für die Ansteuerung von Komponenten in einem lokalen Netzwerk von externer Stelle ist das UPnP-Protokoll (Universal Plug'n Play) bekannt geworden. Allerdings setzt dieses Protokoll voraus, dass die genutzten Geräte, wie insbesondere Router lokaler Netzwerke, zur Verwendung dieses Protokolls ausgebildet sind beziehungsweise dieses unterstützen. Zwar ist eine Unterstützung des UPnP-Protokolls inzwischen durch viele Router gewährleistet, jedoch wird eine entsprechende Option in den Konfigurationseinstellungen des Routers aus Sicherheitsgründen von den Herstellern der Router meistens standardmäßig deaktiviert. Auch hierbei muss demnach der Nutzer eines Routers diesen entsprechend konfigurieren, um zumindest die Nutzung des UPnP-Protokolls ausdrücklich zu aktivieren. Sofern dabei Statusinformationen von Einheiten des lokalen Netzwerks, wie beispielsweise von einer Haussteuereinheit, nur auf Abfrage hin an eine externe Stelle übermittelt oder von einer solchen nur Befehle empfangen werden, so dass die Verbindung in jedem Falle durch die externe Stelle aufgebaut wird, muss der Nutzer zudem den Router so konfigurieren, dass dieser die betreffende Verbindung unter Nutzung des NAT im Wege des Portforwarding der jeweiligen Einheit im lokalen Netzwerk, also beispielsweise der Haussteuereinheit zuleiten kann. Jedoch ist festzustellen, dass der durchschnittliche Nutzer häufig nicht über die erforderlichen Kenntnisse für die dazu erforderliche Konfigurierung des jeweils von ihm verwendeten Routers verfügt oder sich zumindest hiermit nicht beschäftigen möchte.

Durch die DE 10 2009 060 469 A1 wird eine Lösung für den externen Zugriff auf eine in der Schrift als Hausautomatisierungsserver bezeichnete Haussteuereinheit beschrieben, nach welcher der Zugriff auf die Haussteuereinheit über einen zentralen, in das Internet und damit in ein öffentliches Netz eingebundenen Konfigurationsserver ermöglicht wird. Die Kommunikation zwischen der Haussteuereinheit und dem zentralen Konfigurationsserver wird gemäß der in der genannten Druckschrift beschriebenen Lösung über eine zwischen diesen Einheiten dauerhaft bestehende Tunnelverbindung gewährleistet. Die entsprechende Tunnelverbindung wird dabei aufgebaut, sobald die Haussteuereinheit mit einem Router verbunden wird, über welchen die Haussteuereinheit beziehungsweise ein diese umfassendes lokales nicht öffentliches Netzwerk (LAN) mit dem öffentlichen Internet verbunden wird. Allerdings haftet der beschrieben Lösung der Nachteil an, dass eine entsprechende Tunnelverbindung in vergleichsweise hohem Maße Netzressourcen, vor allem aber Ressource eines gegebenenfalls mehrerer solcher Tunnelverbindungen haltenden Servers bindet. Dies gilt insbesondere dann, wenn die Tunnelverbindung(en), wie gemäß der in der DE 10 2009 060 469 A1 beschriebenen Lösung vorgesehen, dauerhaft besteht (bestehen). Darüber hinaus ist der Schrift nicht zu entnehmen, wie ein ständiger externer Zugriff des zentralen Konfigurationsservers auch dann gewährleistet wird, wenn es zu einer Unterbrechung der Tunnelverbindung kommen sollte. Insoweit ist wohl davon auszugehen, dass in einem solchen Falle ein erneuter Aufbau einer Tunnelverbindung seitens der Haussteuereinheit oder eines diese umfassenden lokalen Netzwerks beziehungsweise durch deren Betreiber, zum Beispiel durch Trennung der Haussteuereinheit von dem Router und erneutes Verbinden mit dem Router, veranlasst werden muss.

Eine Möglichkeit des externen Zugriffs auf ein lokales Netzwerk, wie beispielsweise ein eine Haussteuereinheit umfassendes Heimnetzwerk, wird ferner durch die WO2011/053 040 A1 beschrieben. Gemäß der in dieser Schrift beschriebenen Lösung erfolgt der Zugriff auf das lokale Netzwerk explizit, das heißt zwingend unter Nutzung der Tunneltechnologie IPsec. Hierbei werden der NAT-Router des lokalen Netzwerks durchtunnelt und Ressourcen des privaten Netzwerks über ein zentrales Tunnelgateway verfügbar gemacht. Allerdings setzen auch der Umgang mit dieser Tunneltechnik und den entsprechenden an der Verbindung beteiligten Einrichtungen Kenntnisse voraus die beim Durchschnittsanwender häufig nicht oder nur unzureichend vorhanden sind.

Aufgabe der Erfindung ist es, eine Lösung zu schaffen, welche die vorgenannten Nachteile überwindet und eine durchgehend gewährleistete externe Erreichbarkeit einer Haussteuereinheit in einem lokalen Netzwerk ermöglicht, ohne dass der Nutzer dieser Lösung, nämlich der Betreiber des lokalen Netzwerks mit der Haussteuereinheit, die betreffende Haussteuereinheit und/oder die für die Verbindung mit dem öffentlichen Netz verwendete Zugangseinrichtung speziell für diesen Zweck konfigurieren muss. Die bereitzustellende Lösung soll zudem ressourcenschonend in Bezug auf die Beanspruchung von Netzressourcen ausgebildet sein. Hierfür sind ein Verfahren und eine zur Durchführung des Verfahrens geeignete Anordnung anzugeben.

Die Aufgabe wird durch ein Verfahren mit den Merkmalen des Patentanspruchs 1 gelöst. Eine die Aufgabe lösende Anordnung ist durch den ersten Sachanspruch charakterisiert. Vorteilhafte Aus- beziehungsweise Weiterbildungen der Erfindung sind durch die jeweiligen Unteransprüche gegeben.

Das zur Lösung der Aufgabe vorgeschlagene Verfahren ermöglicht es, auf eine in einem IP-basierten lokalen Netzwerk angeordnete Haussteuereinheit zum Erhalt von Statusinformationen oder zu deren Anforderung und/oder zum Zweck der Übertragung von Befehlen, beispielsweise zur Steuerung mit der Haussteuereinheit betriebener elektronischer Hauseinrichtungen oder zur Konfiguration der Haussteuereinheit trotz sich gegebenenfalls ändernder IP-Adressen des lokalen Netzwerks von externer Stelle zuzugreifen. Entsprechendes gilt für das extern veranlasste Aufspielen neuer Firmware auf die Haussteuereinheit. Der Zugriff auf die Haussteuereinheit wird über einen zentralen Server ermöglicht, der in einem öffentlichen Netz angeordnet ist und zu dem genannten Zweck von einem Dienstleister unterhaltenden wird. Soweit entsprechend der auch in den Patentansprüchen gewählten Formulierung der externe Zugriff über den zentralen Server ermöglicht wird, schließt dies die Möglichkeiten ein, dass ein Abruf von der Haussteuereinheit übermittelter Daten und/oder die Übermittlung von Daten an die Hausteuereinheit zur Steuerung oder Konfiguration der Hausteuereinheit oder von an dieser betriebenen Geräten der Haustechnik unmittelbar an dem zentralen Server selbst oder mittels über diesen Server auf die Haussteuereinheit zugreifender externer, nicht zu dem die Haussteuereinheit umfassenden lokalen, das heißt nicht zu dem privaten Netzwerk gehörender Einrichtungen erfolgt. Bei den letztgenannten externen Einrichtungen kann es sich dabei gegebenenfalls auch um Einrichtungen Dritter handeln, denen der Betreiber des lokalen Netzwerkes beziehungsweise der Haussteuereinheit einen solchen Zugriff gestattet hat. In jedem Falle gehören aber weder der zentrale Server, über welchen der Zugriff auf die Haussteuereinheit erfolgt, noch die vorgenannten gegebenenfalls den Server dazu nutzenden Einrichtungen zu dem lokalen Netzwerk mit der Haussteuereinheit. Dieser Umstand charakterisiert den unter Nutzung des Verfahrens ermöglichten Zugriff auf die Haussteuereinheit als einen externen Zugriff.

Das lokale Netzwerk mit der darin eingebundenen Haussteuereinheit ist mit dem öffentlichen Netz über eine Zugangseinrichtung verbunden. Vorzugsweise, aber nicht zwingend handelt es sich hierbei um eine leitungsgebundene Verbindung, wie beispielsweise um eine, abgesehen von eventuellen kurzzeitigen Zwangstrennungen, permanente DSL-Verbindung.

Um den externen Zugriff auf die Haussteuereinheit dauerhaft, das heißt im Grunde jederzeit sowie insbesondere auch nach einer Unterbrechung der vorgenannten Verbindung zu ermöglichen, wird erfindungsgemäß durch die Haussteuereinheit beziehungsweise durch eine auf dieser ablaufende Programmanwendung zyklisch über die Zugangseinrichtung eine Präsenznachricht an den, dem Zugriff auf die Haussteuereinheit dienenden Server des öffentlichen Netzes übermittelt. Die Übermittlung dieser Präsenznachricht erfolgt dabei über die zwischen dem lokalen Netzwerk und dem öffentlichen Netz über die Zugangseinrichtung (nämlich vorzugsweise über einen Router) bestehende Verbindung oder über eine im Falle einer zuvor erfolgten Unterbrechung für den Zweck des Versendens der Präsenznachricht durch die Haussteuereinheit wieder neu aufgebaute Verbindung. Die Präsenznachricht enthält zumindest ein die Hausteuereinheit eindeutig kennzeichnendes Identifikationsmerkmal. Ferner wird durch die Haussteuereinheit zur Übertragung von Statusinformationen und/oder zum Empfang von Befehlen eine Tunnelverbindung zu dem eingangs genannten Server des öffentlichen Netzes aufbaut. Ausführungen dazu, wie der Haussteuereinheit die Adresse des zentralen Servers, an welchen die Präsenznachrichten auszusenden sind, bekannt gemacht wird, sollen an späterer Stelle gegeben werden.

Der Aufbau der Tunnelverbindung geschieht auf Veranlassung durch den Server, welcher hierzu eine Verbindungsanforderung, nämlich eine Anforderung zum Aufbau der vorgenannten Tunnelverbindung an die Haussteuereinheit überträgt. Dies kann seitens des zentralen Servers synchron, also nach dem Empfang einer oder einer festgelegten Anzahl von Präsenznachrichten, oder aber auch asynchron, das heißt unabhängig vom zeitlichen Zyklus der Präsenznachrichten erfolgen. Für die Übertragung einer entsprechenden Verbindungsanforderung nutzt der Server die schon bestehende Verbindung zwischen dem (privaten) lokalen Netzwerk und dem öffentlichen Netz, über welche auch zyklisch die Präsenznachricht von der Haussteuereinheit zu dem im öffentlichen Netz angeordneten Server übertragen wird. Zu diesem Zweck verwaltet der Server eine Hashtabelle oder dergleichen, in welcher ein die jeweils aktuell bestehende Verbindung auf der Socket-Ebene repräsentierender Datensatz unter einem zu Gunsten eines eine externe Zugriffsmöglichkeit auf sein privates Netzwerk beziehungsweise die Haussteuereinheit wünschenden Nutzers eingerichteten Nutzer-Account in Zuordnung zu dem Identifikationsmerkmal der Hausteuereinheit abgelegt ist. Bei dem vorgenannten Datensatz handelt es sich um einen Datensatz, welcher in Zuordnung zu dem die Haussteuereinheit eindeutig kennzeichnenden Identifikationsmerkmal Daten zu der für die Versendung der Präsenznachricht(en) verwendeten und damit durch den zentralen Server für das Versenden der Verbindungsanforderung an die Haussteuereinheit zu verwendenden Verbindung enthält. Hierbei muss es sich nicht zwingend um die öffentliche IP-Adresse des lokalen Netzwerkes mit der anzusprechenden Haussteuereinheit handeln. Vielmehr kommen hierfür auch andere die Verbindung auf der Socket-Ebene repräsentierende Daten, wie Daten zu einem internen Handle auf die geöffnete Verbindung (TCP/IP-Verbindung), in Betracht.

Die bei einem Einsatz der erfindungsgemäßen Lösung dauerhaft bestehende Möglichkeit eines externen Zugriffs auf die in dem nichtöffentlichen, also in dem privaten Netznetzwerk angeordnete Hausteuereinheit, wird den vorstehenden Ausführungen und den das Verfahren charakterisierenden Merkmalen zufolge im Grunde mittels zweier voneinander zu unterscheidender Verbindungen gewährleistet. Hierbei handelt es sich zum einen um die zur Übermittlung der Präsenznachricht an den zentralen Server genutzte permanent bestehende, aber jedenfalls im Falle einer Unterbrechung im Zuge des jeweils nächsten Aussendens der Präsenznachricht durch die Haussteuereinheit wieder aufgebaute Verbindung und zum anderen um die auf Aufforderung durch den zentralen Server aufgebaute Tunnelverbindung, welche vorzugsweise nach der Übertragung von Statusdaten von der Haussteuereinheit zum zentralen Server beziehungsweise nach der Übertragung von Konfigurations- oder Steuerdaten vom zentralen Server zur Haussteuereinheit wieder abgebaut wird. Während es sich bei der zur Übertragung von Präsenznachrichten genutzten, dauerhaft bestehenden aber jedenfalls nach einer eventuellen Unterbrechung neu aufgebauten Verbindung gewissermaßen um eine "leichtgewichtige", das heißt wenig Netzressourcen sowie insbesondere wenig Ressourcen des zentralen Servers beanspruchende Verbindung handelt, wird die dem gegenüber mehr Ressourcen bindende, aber andererseits im Hinblick auf unerwünschte Fremdzugriffe auf übertragene Daten sicherere Tunnelverbindung gewissermaßen nur im Bedarfsfall, nämlich zum Übertragen von Status-, Steuer- oder Konfigurationsdaten, aufgebaut und zudem, wie bereits ausgeführt, nach der Übertragung entsprechender Nutzdaten wieder abgebaut. Insoweit trägt die vorgeschlagene Lösung der Tatsache Rechnung, dass ein entsprechender zentraler Server gleichzeitig erheblich mehr der vorgenannten "leichtgewichtigen" Verbindungen halten können wird, als Tunnelverbindungen, welche seine Ressourcen deutlich stärker belasten.

Ungeachtet des entsprechend dem erfindungsgemäßen Verfahren vorgesehenen Aufbaus der Tunnelverbindung auf Anforderung durch den zentralen Server besteht darüber hinaus vorzugsweise die Möglichkeit, dass die Haussteuereinheit die Tunnelverbindung zu dem Server selbsttätig von sich aus (selbsttätig bezogen auf ihr Verhältnis zum Server) aufbaut. Dies kann zum Beispiel auf Veranlassung einer Routine der die zyklische Aussendung der Präsenznachricht steuernden, von der Haussteuereinheit verarbeiteten Programmanwendung oder einer anderen auf der Haussteuereinheit ablaufenden Anwendung erfolgen, in deren Rahmen unter bestimmten zeitlichen oder aufgrund des Bestehens für Parameter mit der Haussteuereinheit betriebener Geräte festgelegter Bedingungen (ereignisgesteuert) selbsttätig Statusinformationen von der Haussteuereinheit an den zentralen Server übertragen und von diesem gegebenenfalls an computerbasierte Einrichtungen des Betreibers des lokalen (nichtöffentlichen) Netzwerks und/oder Dritter weitergeleitet werden. Die durch die Haussteuereinheit zum Zweck der Übertragung von Nutzdaten, wie Statusinformationen und/oder von Befehlen zum Server aufgebaute Tunnelverbindung wird vorzugsweise zur Schonung von Ressourcen nach der Übertragung der entsprechenden Daten wieder abgebaut.

Gemäß einer vorteilhaften Weiterbildung des Verfahrens ist es vorgesehen, dass im Falle einer Unterbrechung der primär für die Übertragung der Präsenznachrichten vorgesehenen, vorzugsweise leitungsgebundenen Verbindung sowie erfolgloser Versuche zum Wiederaufbau einer solchen Verbindung durch die Haussteuereinheit für das Versenden einer Präsenznachricht eine alternative Verbindung aufgebaut wird. Ein solcher Aufbau einer alternativen Verbindung nach einer Unterbrechung kann dabei entweder unmittelbar nach einem fehlgeschlagenen Versuch zum Aufbau der primär für die Übertragung von Präsenznachrichten vorgesehenen (also vorzugsweise der leitungsgebundenen) Verbindung oder nach einer vorgegebenen Anzahl von Fehlversuchen zum Aufbau der vorgenannten primären Verbindung erfolgen. Im letztgenannten Fall erfolgt durch die auf der Haussteuereinheit ablaufende Software beziehungsweise Programmanwendung der Vergleich eines dafür verwalteten Zählers mit einer in einem Speicher der Haussteuereinheit für diesen Zweck hinterlegten Konfigurationseinstellung.

In korrespondierender Weise zu der gegebenenfalls erfolgenden Auswahl einer alternativen Verbindung für das Versenden der Präsenznachrichten kann nach dem Versenden nur einer oder einer vorgegebenen Anzahl von Präsenznachrichten über die alternative Verbindung durch die Haussteuereinheit für das Versenden der nächsten Präsenznachricht ein erneuter Versuch zum Aufbau einer Verbindung über den primär hierfür vorgesehenen Verbindungsweg unternommen werden.

Als alternative Verbindung zum Versenden der Präsenznachricht kommen insbesondere Verbindungen in Betracht, welche über ein alternatives physikalisches Medium aufgebaut werden. Zu denken ist hierbei insbesondere an eine UMTS-Verbindung oder an eine andere zur Datenübertragung geeignete Funkverbindung. Denkbar ist aber auch der Aufbau einer anderen leitungsgebundenen Verbindung unter Nutzung des Zugangsnetzes eines anderen Zugangsproviders und/oder Nutzung eines gegebenenfalls zu dem lokalen Netzwerk mit der Haussteuereinheit gehörenden weiteren Routers.

Wie bereits ausgeführt, handelt es sich bei der primären, für das Versenden der Präsenznachrichten verwendeten Verbindung vorzugsweise um eine leitungsgebundene IP-Verbindung beziehungsweise TCP/IP-Verbindung. Eine Unterbrechung dieser Verbindung wird bei der Verwendung des TCP-Übertragungsprotokolls seitens der Haussteuereinheit aufgrund einer entsprechend diesem Protokoll für diesen Fall vorgesehenen Signalisierung festgestellt. Darüber hinaus kann das Verfahren außerdem so ausgebildet sein, dass der zentrale Server auf den Eingang einer Präsenznachricht eine deren Eingang bestätigende Antwortnachricht an die Haussteuereinheit zurücksendet und die Haussteuereinheit beziehungsweise die auf dieser ablaufende Programmanwendung auf ein eventuelles Ausbleiben dieser Antwortnachricht in geeignet Weise reagiert. Letzteres ermöglicht insbesondere eine entsprechende Reaktion der Haussteuereinheit im Falle von eventuellen serverseitig (beim zentralen Server) auftretenden Problemen. Die Haussteuereinheit kann dann versuchen, den Server über einen alternativen Verbindungsweg zu kontaktieren. Im Falle der bevorzugten Verwendung einer IPbeziehungsweis TCP-/IP-Verbindung wird eine eventuelle Unterbrechung der (primären) Verbindung zum Versenden der Präsenznachrichten aufgrund der Eigenschaften des Verbindungsprotokolls durch den zentralen Server ebenfalls registriert. Dieser kann hierauf beispielsweise reagieren, indem er nach einem vorgegebenen Timeout, also nach einer vorgegebenen Zeitdauer innerhalb welcher Präsenznachrichten der Haussteuereinheit ausbleiben, in der bereits erwähnten Tabelle (Hashtabelle) den sich auf die betreffende Haussteuereinheit beziehenden Eintrag aus Identifikationsmerkmal der Haussteuereinheit und dieser zugeordneten Angaben zu der für die Versendung der Verbindungsaufforderung zum Aufbau der Tunnelverbindung vorgesehenen Verbindung löscht. Gegebenenfalls kann die betreffende Haussteuereinheit infolge dessen als für eine gewisse Zeit ausnahmsweise nicht erreichbar gekennzeichnet und dieser Status Zugriff wünschenden, nicht zum lokalen Netzwerk mit der Haussteuereinheit gehörenden computerbasierten Einrichtungen des Betreibers der Haussteuereinheit oder Dritter mitgeteilt werden. Im Zusammenhang mit der zuletzt erläuterten Gestaltung des erfindungsgemäßen Verfahren kann es zudem vorgesehen sein, dass dem zentralen Server seitens der Haussteuereinheit zusammen mit den Präsenznachrichten weitere Informationen, wie beispielsweise Informationen über eine (vorübergehende) Außerbetriebnahme der Haussteuereinheit übermittelt werden.

Die zwischen der Haussteuereinheit und dem Server über die Tunnelverbindung ausgetauschten Daten werden vorzugsweise zumindest während einer gegenseitigen Authentifizierungsphase unter Nutzung des SSL-Protokolls oder des TLS-Protokolls, also verschlüsselt, übertragen. Eine entsprechende Authentisierung kann dabei beispielsweise durch den zentralen Server gefordert werden. Denkbar ist es etwa, dass der Server nach einer Unterbrechung (zum Beispiel aufgrund einer Zwangstrennung der DSL-Verbindung) der (im Grunde ständig bestehenden) Verbindung, über welche die Präsenznachricht der Haussteuereinheit übertragen wird, beim Empfang der ersten Präsenznachricht nach der Wiederherstellung der Verbindung eine Authentifizierung fordert. Gegebenenfalls kann aber auch der gesamte Datenaustausch, also auch die Übertragung von Statusinformationen oder Befehlen, verschlüsselt erfolgen. Im Hinblick auf die zuvor angesprochene Client-Server-Authentifizierung ist vorliegend die Haussteuereinheit bezüglich ihrer Außenwirkung, das heißt betrachtet aus der Richtung des öffentlichen Netzes, als Client zu sehen, wohingegen sie innerhalb des lokalen Netzwerks, insbesondere im Verhältnis zu den mit ihr betriebenen elektronischen Hauseinrichtungen, wie beispielsweise einem intelligenten Stromzähler (Smart Meter), einer Waschmaschine oder einem Blockkraftheizwerk, als Server fungiert. Der zuvor genannte SSL-Kanal kann dabei zentralseitig, das heißt bezogen auf den zentralen Server, an einem Sicherheitsgateway terminiert werden, welches dem zentralen Server aus Sicht des lokalen Netzwerks vorgelagert ist.

Bei der Zugangseinrichtung, über welche die Verbindung zwischen dem lokalen Netzwerk und dem öffentlichen Netz hergestellt wird, handelt es sich um eine NAT-fähige Einrichtung, nämlich vorzugsweise um einen Router mit Unterstützung des Network Address Translation Mechanismus. Die Datenpakete mit den Präsenznachrichten werden vorzugsweise unter Nutzung des TCP (Transmission Control Protocol) oder des SCTP (Stream Control Transmission Protocol) an den zentralen Server übermittelt.

Bei dem zuvor bereits mehrfach erwähnten Identifikationsmerkmal der Haussteuereinheit, welche selbstverständlich netzwerkfähig sein muss, handelt es sich entsprechend einer praxisrelevanten Ausbildungsform der Erfindung um die MAC-Adresse (Media-Access-Control-Adresse) der netzwerkfähigen Haussteuereinheit, also um die eindeutige physikalische Adresse ihrer die Einbeziehung in ein Netzwerk ermöglichenden Netzwerkkarte. Diese Adresse kann beispielsweise durch eine zur Umsetzung des Verfahrens in der Haussteuereinheit ablaufende beziehungsweise von einer Verarbeitungseinrichtung der Haussteuereinheit verarbeiteten Programmanwendung ausgelesen und als Bestandteil der Präsenznachricht an den zentralen Server übermittelt werden.

Sofern die Eindeutigkeit des Identifikationsmerkmals gewährleistet ist, kommen selbstverständlich für dieses auch andere Möglichkeiten in Betracht. Eine weitere Möglichkeit besteht zum Beispiel darin, dass ein solches Identifikationsmerkmal in Form einer ID in einem Trusted Platform Module (TPM), also in einem in der Haussteuereinheit verbauten beziehungsweise von ihr aufgenommenen Mikrochip, abgelegt ist und diese ID von der vorgenannten Software beziehungsweise Programmanwendung ausgelesen wird. Darüber hinaus ist auch die Möglichkeit gegeben, dass der Betreiber des lokalen Netzwerks beziehungsweise der Haussteuereinheit eine entsprechende ID manuell über dafür vorgesehene Eingabemittel der Haussteuereinheit eingibt und diese ID in einem vorzugsweise nicht flüchtigen Speicher der Haussteuereinheit abgelegt wird. Für diese Möglichkeit kommen wiederum zwei Varianten in Betracht. Entsprechend einer ersten Variante denkt sich der Betreiber der Haussteuereinheit die ID selber aus. In diesem Falle wird, sobald die Haussteuereinheit erstmals online geht, die entsprechende ID an den zentralen Server übermittelt (gegebenenfalls wird dabei beispielsweise der Nutzer durch den zentralen Server über die Haussteuereinheit bei deren Inbetriebnahme zur Betätigung eines Tasters oder eines anderen Bedienelementes aufgefordert) und diese dort auf ihre Eindeutigkeit überprüft. Sollte eine solche Eindeutigkeit nicht gegeben sein, das heißt die betreffende ID in der Datenbank beziehungsweise Hashtabelle des Servers bereits für eine andere Haussteuereinheit beziehungsweise einen anderen Nutzer registriert sein, würde hierbei der seine Haussteuereinheit neu anmeldende Nutzer aufgefordert werden, eine geänderte ID einzugeben. Der Nutzer-Account, unter welchem die ID abgespeichert wird, kann dabei wahlweise bereits beim Erwerb der Haussteuereinheit durch den Hersteller oder Verkäufer angelegt werden oder aber durch den Nutzer selbst beim erstmaligen Online-Gehen der von ihm erworbenen Haussteuereinheit eingerichtet werden. Insbesondere im letztgenannten Fall ist es dabei selbstverständlich erforderlich, dass die Haussteuereinheit über entsprechende Ein- und Ausgabemittel verfügt. Eine weitere Variante, mit welcher das Identifikationsmerkmal für die Haussteuereinheit, also beispielsweise eine ID, durch den Betreiber der Haussteuereinheit manuell eingegeben wird, ist dadurch gegeben, dass diese ID dem Betreiber beziehungsweise dem Nutzer nach dem Erwerb der Haussteuereinheit beispielsweise durch den Hersteller oder durch ein von ihm beauftragtes Unternehmen per Post zugestellt wird.

Im Hinblick auf eine möglichst komfortable Verfahrensgestaltung wird jedoch den zuerst erläuterten Möglichkeiten für die Vergabe beziehungsweise die Bereitstellung des Identifikationsmerkmals der Vorzug zu geben sein. Als besonders vorteilhaft wird dabei eine Hinterlegung in dem bereits erwähnten TPM angesehen, welches bereits herstellerseitig in die Haussteuereinheit eingefügt wird.

Ähnliche Überlegungen und Möglichkeiten wie die zuvor für das Identifikationsmerkmal erläuterten, bestehen auch für das Erfordernis, der Haussteuereinheit die öffentliche IP-Adresse des zentralen Servers mitzuteilen, an welchen die Präsenznachrichten zu übermitteln sind. Auch hier kommt insbesondere die Möglichkeit in Betracht, dass diese IP-Adresse bereits herstellerseitig ab Werk in einem Speicher der Haussteuereinheit hinterlegt wird. Noch günstiger ist es in dem Zusammenhang, wenn durch den Hersteller in der Haussteuereinheit nicht eine IP-Adresse im engeren Sinne hinterlegt wird, sondern ein Hostname für den zentralen Server. Hierdurch ist es möglich, über entsprechende DNS-Einträge, also Einträge des Domain Name Systems in DNS-Servern des öffentlichen IP-Netzes, den Hostnamen mit mehreren IP-Adressen eines zentralen Servers zu assoziieren und somit für ein Load Balancing zu sorgen und eine Überlastung eines einzelnen zentralen Servers zu vermeiden. Die IP-Adresse des zentralen Servers beziehungsweise ein entsprechender Hostname können aber je nach Ausgestaltung des Verfahrens der Haussteuereinheit auch durch Einfügen einer SIM-Karte oder einer Chipkarte mitgeteilt werden. Grundsätzlich kommt auch eine manuelle Konfiguration durch Eingabe des Hostnamens oder der IP-Adresse in Betracht, wobei auch hier aus Gründen des Komforts ein werkseitiger Eintrag zu bevorzugen ist oder aber der Nutzer beziehungsweise Betreiber der Haussteuereinheit allenfalls noch die schon erwähnte SIM- oder Chipkarte einfügen müssen sollte.

Eine zur Lösung der Aufgabe ausgebildete beziehungsweise zur Durchführung des zuvor erläuterten Verfahrens geeignete Anordnung besteht mindestens aus einer in einem IP-basierten lokalen Netzwerk angeordneten, eine Verarbeitungseinrichtung aufweisenden Haussteuereinheit, aus einem in einem IP-basierten öffentlichen Netz angeordneten zentralen Server und aus einer NAT-fähigen Zugangseinrichtung zur Verbindung des lokalen Netzwerks (LAN) mit dem öffentlichen Netz, das heißt vorzugsweise mit dem Internet. Hierbei ist die Anordnung für einen über den zentralen Server, beispielsweise zum Zweck der Anforderung von Statusdaten und/oder des Steuerns mit der Haussteuereinheit betriebener elektronischer Hauseinrichtungen, erfolgenden Zugriff auf die Haussteuereinheit eingerichtet. Selbstverständlich kann und wird die Anordnung bei einer praktischen Umsetzung vorzugsweise mehrere, jeweils mindestens eine Haussteuereinheit umfassende lokale Netze und gegebenenfalls auch mehrere zentrale Server aufweisen, wobei sich aber die nachfolgenden Ausführungen insoweit ohne Beschränkung, sondern lediglich vereinfachend, immer auf das Interagieren einer Haussteuereinheit mit einem zentralen Server des öffentlichen Netzes beziehen.

Erfindungsgemäß ist die Haussteuereinheit mit einer in einem Speicher gehaltenen Programmanwendung ausgestattet, welche während des Betriebes der Haussteuereinheit zumindest nach Einstellung eines entsprechenden Betriebsmodus von der Verarbeitungseinrichtung der Steuereinheit verarbeitet wird. Dies meint, dass die vorgenannte Programmanwendung entweder beim Betrieb der Haussteuereinheit ständig abläuft oder die Haussteuereinheit einen speziellen, den externen Zugriff von außen ermöglichenden, beispielsweise durch Betätigung eines Schalters einstellbaren Betriebsmodus aufweist, in welchem die genannte Programmanwendung abläuft. Im letztgenannten Falle ist es dem Nutzer, also dem Betreiber des lokalen Netzwerks demnach möglich, die Haussteuereinheit für den externen Zugriff zu sperren oder aber sie durch Einstellung des zuvor genannten Betriebsmodus für einen Zugriff über den zentralen Server freizugeben. In jedem Falle ist die Software beziehungsweise die Programmanwendung so gestaltet, dass bei ihrer Verarbeitung durch die Verarbeitungseinrichtung von der Haussteuereinheit selbsttätig die bereits erwähnte Präsenznachricht mit dem die Haussteuereinheit eindeutig kennzeichnenden Identifikationsmerkmal zyklisch an den zentralen Server übermittelt wird. Ferner baut die Haussteuereinheit im Zusammenhang mit der Verarbeitung der vorgenannten Programmanwendung zur Übertragung von Statusinformationen und/oder zum Empfang von Befehlen für die Haussteuereinheit nach dem Empfang einer entsprechenden Verbindungsanforderung des Servers oder gegebenenfalls auch selbsttätig von sich aus eine Tunnelverbindung zu dem Server auf. Der die Präsenznachricht der Haussteuereinheit zyklisch empfangende zentrale Server hält eine Hashtabelle beziehungsweise Datenbank oder hat Zugriff auf eine Datenbank, in welcher das Identifikationsmerkmal der Haussteuereinheit unter einem zu Gunsten des Betreibers der Hausteuereinheit eingerichteten Account abgelegt wird.

Von der Erfindung umfasst ist auch eine Ausbildungsform der Anordnung, bei welcher die Haussteuereinheit virtueller Art, das heißt auf einem computerbasierten Endgerät virtualisiert ist. Hierbei ist vorzugsweise der virtuellen Haussteuereinheit in dem nichtöffentlichen lokalen Netzwerk eine eigene IP-Adresse zugewiesen. Je nach Konfiguration ist es aber auch möglich, dass die IP-Adresse des Hosts, das heißt Computers verwendet wird, auf welchem die Haussteuereinheit virtualisiert ist. Im Rahmen bekannter Virtualisierungstechniken, werden dabei auch entsprechende Betriebsmodi zur Verfügung gestellt, welche dem zentralen Server gegebenenfalls ausschließlichen einen Zugriff auf die virtualisierte Einheit ermöglichen.

Die zur Lösung der Aufgabe vorgeschlagene, zuvor grundsätzlich erläuterte Anordnung kann zudem vorteilhafterweise um computerbasierte Einrichtungen des Betreibers des lokalen beziehungsweise nichtöffentlichen Netzwerks mit der Haussteuereinheit und/oder Dritter ergänzt sein, welche in dem öffentlichen Netz angeordnet sind und denen über den zentralen Server der Zugriff auf die Haussteuereinheit ermöglicht wird. Bei diesen Einrichtungen kann es sich beispielsweise um Einrichtungen der Hersteller von mit der Haussteuereinheit betriebenen elektronischen Hauseinrichtungen, also beispielsweise um eine mit der Haussteuereinheit betriebene Waschmaschine, handeln. Vorzugsweise müssen sich die betreffenden Einrichtungen dafür gegenüber dem zentralen Server authentifizieren.

Ferner ist die Haussteuereinheit der Anordnung gemäß einer bevorzugten Weiterbildung mit einem UMTS-Modul, das heißt mit einer UMTS-Sende- und Empfangseinrichtung ausgestattet. Hierdurch ist gewissermaßen ein Fallback für die Haussteuereinheit gegeben, durch welches diese auch im Falle eines eventuellen Ausfalls der vorzugsweise leitungsgebundenen Verbindung Präsenznachrichten aussenden kann und von externer Stelle erreichbar ist.

Eine sich auf den zentralen Server beziehende Weiterbildung der Anordnung besteht darin, dass dieser ein Logging Modul aufweist oder ihm ein solches Logging Modul zugeordnet ist. In diesem Modul werden zum Zweck einer eventuell erforderlichen Nachweisbarkeit von Betriebszuständen oder Statussituationen der mit der Haussteuereinheit betriebenen elektronischen Hauseinrichtungen beziehungsweise Geräte Log-Dateien mit dem zentralen Server übermittelten oder durch ihn abgefragten Statusdaten mit einem zeitlichen Vermerk ihrer Erfassung gespeichert.

Nachfolgend soll ein Ausführungsbeispiel der Erfindung gegeben werden. In den Zeichnungen zeigen:
- Fig. 1:: Eine schematische Darstellung einer möglichen Ausbildungsform der erfindungsgemäßen Anordnung,
- Fig. 2:: ein Schema zur Darstellung möglicher Abläufe des erfindungsgemäßen Verfahrens.

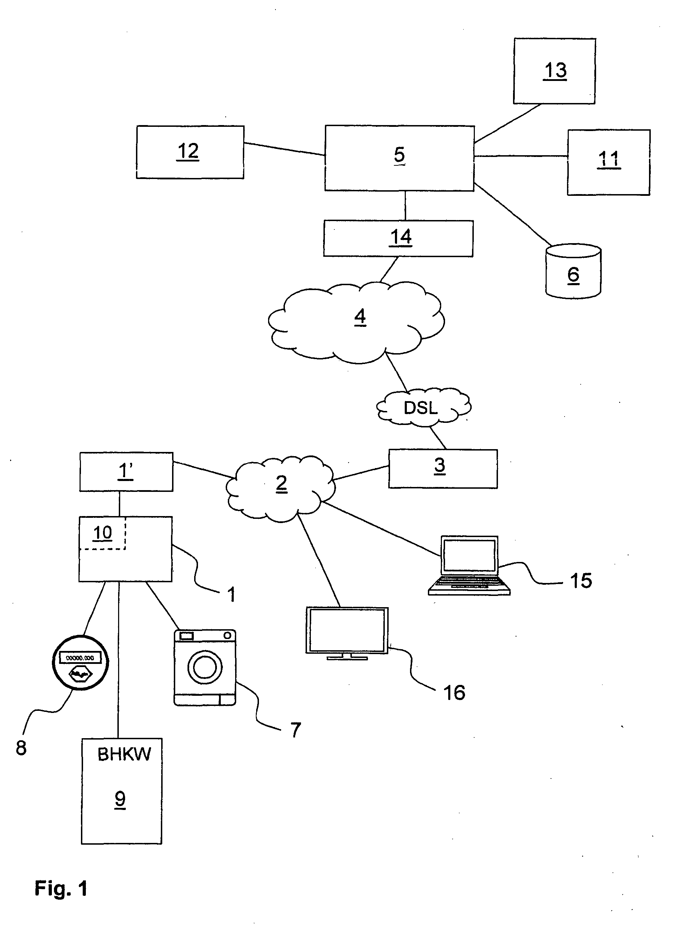

Anhand der zugehörigen Fig. 1 sollen die entsprechende durch die Figur dargestellte Anordnung, aber auch verfahrensbezogene Aspekte der Erfindung erläutert werden. Als wesentliche Elemente der in der Fig. 1 gezeigten Anordnung sind das lokale Netzwerk 2 mit der als Bestandteil dieses lokalen Netzwerks 2 angeordneten Haussteuereinheit 1, das IP-basierte öffentliche Netz 4 mit dem zentralen Server 5 und die NAT-fähige Zugangseinrichtung 3, nämlich ein Router, über welchen das lokale Netzwerk 2 mit dem öffentlichen Netz 4 verbindbar ist, anzusehen. Gemäß dem Ausführungsbeispiel nach der Fig. 1 werden an der Haussteuereinheit 1 eine Waschmaschine 7, ein Smart Meter 8, also ein intelligenter Stromzähler, und ein Blockheizkraftwerk 9 (BHKW) betrieben. Neben der Haussteuereinheit 1, auf welche gemäß der Erfindung ein über den zentralen Server 5 erfolgender externer Zugriff ermöglicht sein soll, können in das lokale Netzwerk 2 beispielsweise eines Einfamilienhauses weitere netzwerkfähige Geräte, wie beispielsweise ein moderner Fernseher 16 mit einer Netzwerkkarte oder ein PC oder Laptop 15, einbezogen sein.

Im Betrieb wird von der Haussteuereinheit 1, veranlasst durch eine von ihrer Verarbeitungseinrichtung verarbeitete Software beziehungsweise Programmanwendung, über den Router 3 regelmäßig eine Präsenznachricht an den zentralen Server 5 im öffentlichen Netz 4 übermittelt. Bestandteil dieser Präsenznachricht ist ein Identifikationsmerkmal, durch welches die betreffende Haussteuereinheit 1 eindeutig identifiziert wird. Im Zusammenhang mit dem dargestellten Ausführungsbeispiel wird angenommen, dass das entsprechende Identifikationsmerkmal auf einem herstellerseitig in der Haussteuereinheit 1 verbauten Trusted Platform Module abgelegt ist und aus diesem zur Übermittelung der Präsenznachricht an den zentralen Server 5 ausgelesen wird. Die Übermittlung der Präsenznachricht erfolgt über eine im Grunde permanent bestehende, aber jedenfalls im Falle einer (zum Beispiel infolge einer Zwangstrennung) erfolgenden Unterbrechung (spätestens im Zusammenhang mit der Versendung der nächsten Präsenznachricht durch die Haussteuereinheit) wieder aufgebaute TCP/IP-Verbindung. Dabei wird die IP-Adresse des zentralen Servers 5, an welchen die Präsenznachrichten übermittelt werden, durch geeignete, in dem öffentlichen Netz 4 angeordnete (hier nicht dargestellte) Einrichtungen des DNS-Systems aus einem vom Hersteller der Haussteuereinheit 1 in dieser hinterlegten Hostnamen für den zentralen Server 5 abgeleitet. Aufgrund der zyklischen Übermittlung der Präsenznachricht liegt bei dem zentralen Server 5 zu jederzeit eine Information über die zwischen dem lokalen Netzwerk 2 und dem Server 5 bestehende Verbindung vor. Die entsprechende Verbindung wird durch den Server 5 in einer Hash-Tabelle einer Datenbank 6 in Form eines sie auf der Socket-Ebene repräsentierenden Datensatzes in Zuordnung zu dem mit der Präsenznachricht übermittelten Identifikationsmerkmal unter einem für den Betreiber des lokalen Netzwerks beziehungsweise den die Zugriffsmöglichkeit auf die Haussteuereinheit wünschenden Nutzer eingerichteten Account gespeichert. Die betreffende Datenbank 6 kann dabei ein physischer Bestandteil des zentralen Servers 5 oder als eine separate, im Zugriff des Servers 5 befindliche Einheit ausgebildet sein.

Für einen Zugriff auf die Haussteuereinheit 1 überträgt der Server 5 an diese eine Verbindungsaufforderung. Nach dem Empfang dieser Verbindungsaufforderung wird durch die in der Haussteuereinheit 1 ablaufende beziehungsweise von deren Verarbeitungseinheit verarbeitete Programmanwendung selbsttätig eine Tunnelverbindung zu dem Server 5 aufgebaut. Unter Nutzung dieser Tunnelverbindung können, gegebenenfalls nach einer zuvor durchgeführten Authentifikationsprozedur, Statusinformationen, Befehle und Firmware-Updates für die Haussteuereinheit 1 oder an ihr betriebene Geräte sicher, das heißt weitgehend ohne Zugriffsmöglichkeit durch nicht autorisierte Dritte, übertragen werden. Für die Bereitstellung des Tunnels können dabei im Grunde beliebige Tunnelprotokolle (L2TP, PPP, IPSec und dergleichen) verwendet werden.

Als unmittelbare Bestandteile des zentralen Servers 5 oder als periphere Einheiten sind in oder an diesem zudem ein Semantikmodul 13 und ein Logging Modul 11 ausgebildet. Über die durch die Haussteuereinheit 1 aufgebaute Tunnelverbindung kann die Haussteuereinheit 1 durch den zentralen Server 5 zum Zweck der Steuerung oder der Abfrage von Statusdaten der mit der Haussteuereinheit 1 betriebenen Hauseinrichtungen 7, 8, 9 - hier die Waschmaschine 7, das Smart Meter 8 und das BHKW 9-angesprochen werden. Hierbei leitet der NAT-fähige Router 3, ohne dass es eines Zutuns des Betreibers des lokalen Netzwerks 2 bedarf, entsprechende Datenpakete des zentralen Servers 5 unter Nutzung des NAT-Mechanismus, genauer gesagt des Destination NAT (DNAT = Destination Network Address Translation) an die Haussteuereinheit 1 weiter. So ist es beispielsweise möglich, in Abhängigkeit der Auslastung des öffentlichen Energienetzes über den zentralen Server 5 das an der Haussteuereinheit 1 betriebene Blockheizkraftwerk 9 anzufahren oder abzuschalten oder Statusdaten der Waschmaschine 7 oder des Smart Meters 8 abzufragen. Dabei werden entsprechende Statusdaten beziehungsweise Zustände und Signale, die durch den zentralen Server 5 von der Haussteuereinheit 1 empfangen werden, von der Semantikeinheit 13 interpretiert und gegebenenfalls die Aussendung weiterer Steuerbefehle des Servers 5 an die Haussteuereinheit 1 veranlasst. Ferner werden durch das dem zentralen Server 5 zugeordnete Logging Modul 11 die bei dem zentralen Server 5 eingegangenen Statusdaten zum Zweck der Nachweisbarkeit für einen festgelegten Zeitraum gespeichert. Gegebenenfalls beziehungsweise bei Bedarf kann in diesem Zusammenhang in einer von dem Logging Modul 11 gehaltenen Log-Datei auch die von der Haussteuereinheit 1 durch Versenden der Präsenznachricht zyklisch indirekt mitgeteilte aktuelle IP-Adresse des lokalen Netzwerks 2 gespeichert werden.

Die Haussteuereinheit 1 der in der Fig. 1 beispielhaft gezeigten Anordnung weist zusätzlich zu ihrer Einbindung in das lokale Netzwerk 2 und die hierdurch gegebene Verbindung zu dem öffentlichen Netz 4 ein UMTS-Modul 10 auf, um ihre ständige Erreichbarkeit auch bei einem eventuellem DSL-Ausfall zu gewährleisten.

Gemäß dem gezeigten Ausführungsbeispiel ist darüber hinaus dem Betreiber des lokalen (nichtöffentlichen) Netzwerkes 2 beziehungsweise dem Betreiber der Haussteuereinheit 1 und/oder Dritten mittels entsprechender computerbasierten Einrichtungen 12 über den zentralen Server 5 ein Zugriff auf die Haussteuereinheit 1 ermöglicht. Auf diese Weise kann beispielsweise der Hersteller der Haussteuereinheit 1 oder der Hersteller eines mit dieser betriebenen Gerätes 7, 8, 9 Updates der Firmware für die Haussteuereinheit 1 beziehungsweise das Gerät 7, 8, 9 übermitteln.

Zwischen dem lokalen Netzwerk 2 und dem öffentlichen Netz 4 besteht, wie bereits ausgeführt, vorzugsweise eine leitungsgebundene Verbindung. In dem gezeigten Beispiel ist das lokale Netzwerk 2 beziehungsweise dessen Zugangseinrichtung 3, nämlich der Router, mit dem öffentlichen Netz 4 über eine DSL-Leitung verbunden. An diese Kommunikationsverbindung werden dabei lediglich die üblichen Sicherheitsanforderungen, wie Datenintegrität, Vertraulichkeit und Authentizität, gestellt. Jedoch kann die Übertragung von Daten zum Zweck der gegenseitigen Authentifikation von Haussteuereinheit 1 und Server 5 auch unter Nutzung des SSL- oder TLS-Protokolls erfolgen. Eine solche Authentifikation kann gegebenenfalls durch den Server gefordert werden, sofern beispielsweise in der Nacht eine Zwangstrennung der DSL-Verbindung zwischen dem lokalen Netzwerk 2 und dem öffentlichen Netz 4 erfolgt und beim Server nach der Wiederherstellung der Verbindung erstmals wieder eine Präsenznachricht eingeht. Dabei authentifizieren sich der zentrale Server 5 und die Haussteuereinheit 1 nach einem kryptographischen Authentifikationsverfahren gegenseitig (mutual auth). Hierfür ist die Haussteuereinheit 1 mit einem SSL-Client 1' ausgestattet. Weitere Daten können dann zur Verringerung des Aufwandes auch unverschlüsselt über eine Tunnelverbindung an den zentralen Server 5 übertragen werden. Gemäß dem gezeigten Ausführungsbeispiel wird die zuvor angesprochene SSL-Verbindung serverseitig durch ein aus Sicht des lokalen Netzwerks 2 dem zentralen Server 5 vorgelagertes Sicherheitsgateway 14 terminiert. Das Sicherheitsgateway 14 übernimmt dabei zum Zweck einer Entlastung des zentralen Servers 5 die Terminierung des (gegebenenfalls kryptographisch abgesicherten) Tunnels. Zum und für den zentralen Server 5 erfolgt die Kommunikation aus dem Tunnel mittels einfacher zustandsloser Kommunikationsprotokolle, wie http (Hypertext Transfer Protocol), REST (Representational State Transfer), SOAP (Simple Object Access Protocol) oder dergleichen.

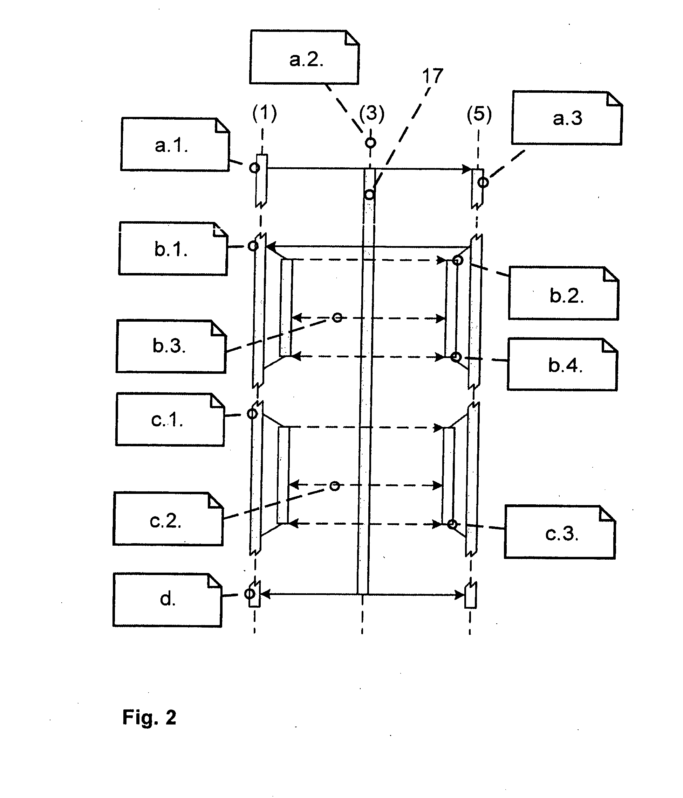

Das in der Fig. 2 gezeigte Schema veranschaulicht mögliche Abläufe des erfindungsgemäßen Verfahrens und die dabei zwischen der Haussteuereinheit 1 und dem zentralen Server 5 jeweils aufgebauten beziehungsweise bestehenden Verbindungen und gibt insoweit auch die möglichen Betriebszustände des korrespondierenden Systems wieder. Die jeweils aufgebauten oder bestehenden Verbindungen sind in dem Schema durch Pfeile dargestellt. Pfeile mit einer durchgezogenen Linie symbolisieren dabei eine dem Grunde nach permanent bestehende TCP/IP-Verbindung, über welche zyklisch die Präsenznachricht von der Haussteuereinheit 1 zum Server 5 übertragen wird, wohingegen die Pfeile mit gestrichelter Linie eine Tunnelverbindung, das heißt eine gesicherte und authentisierte Verbindung symbolisieren. Die Verbindungen bestehen, wie bereits ausgeführt, jeweils zwischen der Haussteuereinheit 1 und dem zentralen Server 5, was durch die im oberen Teil der Zeichnung in Klammern gesetzten Bezugszeichen der betreffenden Elemente des Systems verdeutlicht wird. Dabei werden die jeweiligen Verbindungen zwischen dem nicht öffentlichen lokalen Netzwerk 2 (siehe Fig. 1), in welchem die Haussteuereinheit 1 angeordnet ist, und dem öffentlichen Netz 4, in welchem der zentrale Server 5 angeordnet ist, über die Zugangseinrichtung 3, das heißt vorzugsweise über einen Router, hergestellt. Durch die NAT-fähige Zugangseinrichtung 3 und die von ihr ausgeführte NAT (Network Address Translation = Netzwerkadressübersetzung) ist insoweit gewissermaßen eine "Lebenslinie" 17 für das System hergestellt. Dabei ist dem zentralen Server 5 im Grunde jederzeit die aktuelle IP-Adresse der Zugangseinrichtung 3 bekannt. Jedenfalls sind dem Server 5 aber Angaben zu der Verbindung bekannt, die ihm zusammen mit der auf der Zugangseinrichtung (dem Router) ablaufenden NAT einen Zugriff auf die Haussteuereinheit 1 und die Übermittlung einer Verbindungsanforderung zum Aufbau einer Tunnelverbindung an die Haussteuereinheit 1 ermöglichen.

Unter Bezug auf das in der Fig. 2 dargestellte Schema sei angenommen, dass die zwischen der Haussteuereinheit 1 und dem zentralen Server 5 über die Zugangseinrichtung 3 im Grunde permanent bestehende TCP/IP-Verbindung, beispielsweise durch eine nächtliche Zwangstrennung, kurzzeitig unterbrochen wird. Da die Haussteuereinheit 1 zyklisch, das heißt mit einer in ihren Konfigurationseinstellungen hinterlegten zeitlichen Periode, eine Präsenznachricht an den Server 5 übermittelt, wird spätestens durch sie kurz nach dem Bestehen einer solchen Unterbrechung der Aufbau einer neuen Verbindung zum Server 5 initiiert (a.1.). Im Rahmen des Aufbaus dieser Verbindung hin zum öffentlichen Netz 4 erhält die Zugangseinrichtung 3 beziehungsweise der Router eine neue öffentliche IP-Adresse (a.2.). Über diese öffentliche IP-Adresse sind die Zugangseinrichtung 3 und das private lokale Netzwerk von externer Stelle, wie beispielsweise durch den zentralen Server 5, erreichbar. Aufgrund der in der Zugangseinrichtung 3 ablaufenden NAT ist dabei auch ein Zugriff auf die Haussteuereinheit 1 gegeben. Die durch die Haussteuereinheit 1 aufgebaute Verbindung zum Server 5 besteht als feste, ungesicherter Verbindung (a.3.) und stellt dabei eine Client-Server-Verbindung dar, in deren Rahmen die Haussteuereinheit 1 gegenüber dem zentralen Server 5 als Client fungiert.

Durch die mit b.1. bis b.4 bezeichneten Ablauf- beziehungsweise Systemzustände werden die Abläufe beim Aufbau einer gesicherten Verbindung zwischen der Haussteuereinheit 1 und dem Server 5 symbolisiert, über welche beispielsweise von dem Server 5 Befehle an die Haussteuereinheit 1 übertragen werden. Hierbei fordert der Server 5 die Haussteuereinheit 1 zum Aufbau einer entsprechenden gesicherten Tunnelverbindung auf, um die betreffenden Befehle an die Haussteuereinheit 1 übermitteln zu können (b.1.). Die durch den Server 5 über die bestehende TCP/IP-Verbindung gesendete Aufforderung zum Aufbau der Tunnelverbindung wird durch den auf die Haussteuereinheit 1 gerichteten Pfeil mit durchgezogener Linie symbolisiert. Nach dem Erhalt der Verbindungsaufforderung baut die Haussteuereinheit 1 eine gesicherte Tunnelverbindung zum zentralen Server 5 auf und authentifiziert sich gegenüber diesem (b.2.). Danach können in beide Richtungen Daten zwischen der Haussteuereinheit 1 und dem zentralen Server 5 übertragen beziehungsweise ausgetauscht werden (b.3.), so dass der Server 5, wie vorstehend beispielsweise angenommen, Befehle an die Haussteuereinheit 1 übermitteln kann. Um Ressourcen zu sparen, wird die zwischen der Haussteuereinheit 1 und dem zentralen Server 5 bestehende Tunnelverbindung dann vorzugsweise, insbesondere sofern über einen längeren Zeitraum hinweg über diese Verbindung keine Daten übertragen werden, beendet (b.4.). Letzteres ist jedoch nicht zwingend erforderlich.

Gemäß den mit c.1. bis c.3. bezeichneten Zuständen besteht zwischen der Haussteuereinheit 1 und dem zentralen Server 5 ebenfalls eine Tunnelverbindung, wobei deren Aufbau durch die Haussteuereinheit 1 selbst, das heißt ohne entsprechende Aufforderung durch den Server 5, initiiert wird (c.1.). Eine entsprechende Situation kann zum Beispiel gegeben sein, wenn in einer der mit der Haussteuereinheit 1 betriebenen Hauseinrichtungen 7, 8, 9 (siehe Fig. 1) ein Betriebszustand (ein Ereignis) auftritt, bei welchem die Haussteuereinheit 1 aufgrund einer dafür in ihr hinterlegten Regel eine entsprechende Mitteilung über den Eintritt dieses Betriebszustandes an den Server 5 überträgt. Auch hier kann nach dem Bestehen der Tunnelverbindung ein Datenaustausch zwischen der Haussteuereinheit 1 und dem zentralen Server 5 in beiden Richtungen erfolgen (c.2.). Ebenfalls wie zuvor wird die Tunnelverbindung bei länger bestehender Nichtaktivität (zwischen der Haussteuereinheit 1 und dem zentralen Server 5 werden keine Daten ausgetauscht) vorzugsweise wieder abgebaut. Gemäß d. besteht dann jedoch im Grunde die permanente TCP/IP-Verbindung zwischen der Haussteuereinheit 1 und dem Server 5 fort.

### Verwendete Bezugszeichen

- 1: Haussteuereinheit
- 1': SSL-Client
- 2: lokales Netzwerk
- 3: Zugangseinrichtung, zum Beispiel Router
- 4: öffentliches Netz
- 5: zentraler Server
- 6: Datenbank
- 7, 8, 9: elektronische Hauseinrichtungen
- 10: UMTS-Modul
- 11: Logging Modul
- 12: computerbasierte Einrichtung
- 13: Semantikmodul
- 14: Sicherheitsgateway
- 15: PC oder Laptop
- 16: Fernseher
- 17: "Lebenslinie"

## Patentansprüche

1. Verfahren zur dauerhaften Ermöglichung des externen Zugriffs auf eine in einem nichtöffentlichen, IP-basierten lokalen Netzwerk (2) angeordnete Haussteuereinheit (1) über einen nicht zu diesem Netzwerk (2) gehörenden, in einem IP-basierten öffentlichen Netz (4) angeordneten zentralen Server (5), wobei das lokale Netzwerk (2) über eine Zugangseinrichtung (3) mit dem öffentlichen Netz (4) verbunden ist, **dadurch gekennzeichnet, dass** die Haussteuereinheit (1) zyklisch über die Zugangseinrichtung (3) und die über diese zwischen dem lokalen Netzwerk (2) und dem öffentlichen Netz (4) bestehende oder im Falle einer Unterbrechung für diesen Zweck durch die Haussteuereinheit (1) wieder neu aufgebaute Verbindung eine Präsenznachricht an den Server (5) übermittelt, welche zumindest ein die Hausteuereinheit (1) eindeutig kennzeichnendes Identifikationsmerkmal enthält und dass durch die Haussteuereinheit (1) zur Übertragung von Statusinformationen und/oder zum Empfang von Befehlen eine Tunnelverbindung zu dem Server (5) aufgebaut wird, wobei die Haussteuereinheit (1) diese Tunnelverbindung auf Veranlassung durch den Server (5) aufbaut, über welchen unter einem auf dem Server (5) in Zuordnung zu dem betreffenden Identifikationsmerkmal der Haussteuereinheit (1) eingerichteten Nutzer-Account ein externer Zugriff auf die Haussteuereinheit (1) dadurch gegeben ist, dass der Server (5) über die im Zusammenhang mit dem Empfang der Präsenznachrichten bestehende Verbindung eine Verbindungsanforderung zum Aufbau der Tunnelverbindung an die Haussteuereinheit (1) überträgt.

2. Verfahren nach Anspruch 1, **dadurch gekennzeichnet, dass** die Übertragung der Präsenznachricht zwischen dem lokalen Netzwerk (2) und dem öffentlichen Netz (4) über eine leitungsgebundene Verbindung erfolgt.

3. Verfahren nach Anspruch 2, **dadurch gekennzeichnet, dass** im Falle einer Unterbrechung der leitungsgebundenen Verbindung und erfolgloser Versuche der Haussteuereinheit (1) zum Wiederaufbau einer für das Versenden von Präsenznachrichten zur verwendenden leitungsgebundenen Verbindung durch die Haussteuereinheit (1) für das Versenden einer Präsenznachricht eine alternative Verbindung aufgebaut wird.

4. Verfahren nach Anspruch 3, **dadurch gekennzeichnet, dass** jeweils nach dem Versenden einer Präsenznachricht oder einer vorgegebenen Anzahl von Präsenznachrichten über die alternative Verbindung durch die Haussteuereinheit (1) für das Versenden der nächsten Präsenznachricht ein erneuter Versuch zum Aufbau einer Verbindung über den primär hierfür vorgesehenen leitungsgebundenen Verbindungsweg unternommen wird.

5. Verfahren nach Anspruch 3 oder 4, **dadurch gekennzeichnet, dass** als alternative Verbindung zum Versenden der Präsenznachricht eine UMTS-Verbindung oder eine andere zur Datenübertragung geeignete Funkverbindung aufgebaut wird.

6. Verfahren nach einem der Ansprüche 1 bis 5, **dadurch gekennzeichnet, dass** die zwischen der Haussteuereinheit (1) und dem Server (5) über die Tunnelverbindung ausgetauschten Daten zumindest während einer gegenseitigen Authentifizierungsphase unter Nutzung des SSL-Protokolls oder des TLS-Protokolls übertragen werden.

7. Verfahren nach Anspruch 1, **dadurch gekennzeichnet, dass** als Identifikationsmerkmal die MAC-Adresse der Haussteuereinheit (1) verwendet und über die zwischen dem lokalen Netzwerk (2) und dem öffentlichen Netz (4) über die Zugangseinrichtung (3) bestehende Verbindung an den zentralen Server (5) übertragen wird.

8. Verfahren nach Anspruch 1, **dadurch gekennzeichnet, dass** als Identifikationsmerkmal ein Identifikator verwendet wird, der auf einem in der Haussteuereinheit (1) angeordneten oder in sie einzufügenden Speichermodul abgelegt wird.

9. Verfahren nach einem der Ansprüche 1 bis 8, **dadurch gekennzeichnet, dass** über den zentralen Server (5) auch anderen nicht in das lokale Netzwerk (2) mit der Haussteuereinheit (1) eingebundenen computerbasierten Einrichtungen (12) der Zugriff auf die Haussteuereinheit (1) ermöglicht wird.

10. Anordnung mit einer in einem nichtöffentlichen IP-basierten lokalen Netzwerk (2) angeordneten, eine Verarbeitungseinrichtung aufweisenden Haussteuereinheit (1) und mit einem in einem IP-basierten öffentlichen Netz (4) angeordneten zentralen Server (5), wobei das lokale Netzwerk (2) über eine Zugangseinrichtung (3) mit dem öffentlichen Netz (4) verbunden ist und die Anordnung für einen, über den zentralen Server (5) auf die Haussteuereinheit (1) und an dieser betriebene elektronische Hauseinrichtungen (7, 8, 9) erfolgenden Zugriff eingerichtet ist, **dadurch gekennzeichnet, dass** die Haussteuereinheit (1) mit einer in einem Speicher gehaltenen und zumindest nach Einstellung eines entsprechenden Betriebsmodus von deren Verarbeitungseinrichtung verarbeiteten Programmanwendung ausgestattet ist, welche zyklisch eine Präsenznachricht mit einem die Hausteuereinheit (1) eindeutig kennzeichnenden Identifikationsmerkmal an den Server (5) übermittelt und nach dem Empfang einer entsprechenden Verbindungsanforderung des Servers (5) eine Tunnelverbindung zur Übertragung von Statusinformationen und/oder zum Empfang von Befehlen für die Haussteuereinheit zu dem Server (5) aufbaut.

11. Anordnung nach Anspruch 10 **dadurch gekennzeichnet, dass** die Haussteuereinheit (1) auf einem computerbasierten Endgerät virtualisiert ist.

12. Anordnung nach Anspruch 10, **dadurch gekennzeichnet, dass** der virtuellen Haussteuereinheit (1) in dem nichtöffentlichen lokalen Netzwerk (2) eine eigene IP-Adresse zugewiesen ist.

13. Anordnung nach einem der Ansprüche 10 bis 12, **dadurch** gekennzeichnet, **dass** in der Haussteuereinheit (1) ein Trusted Platform Module angeordnet ist, auf welchem das die Hausteuereinheit (1) eindeutig kennzeichnende und von der die Präsenznachrichten versendenden Programmanwendung auslesbare Identifikationsmerkmal abgelegt ist.

14. Anordnung nach einem der Ansprüche 10 bis 13, **dadurch** gekennzeichnet, **dass** die Haussteuereinheit (1) ein durch die Programmanwendung für den Versand der Präsenznachrichten ansprechbares UMTS-Modul (10) aufweist.

15. Anordnung nach Anspruch 10 oder 11, **dadurch gekennzeichnet, dass** der zentrale Server (5) ein Logging Modul (11) aufweist oder ihm ein solches zugeordnet ist, in welchem von der Haussteuereinheit (1) übermittelte oder über sie abgefragte Statusdaten mit der Haussteuereinheit (1) betriebener Geräte (7, 8, 9) in Log-Dateien mit einem zeitlichen Vermerk ihrer Erfassung zumindest temporär speicherbar sind.

## Claims

1. Method for permanently enabling external access to a home control unit (1) arranged in a non-public, IP-based local network (2) via a central server (5) not belonging to this network (2) and arranged in an IP-based public network (4), the local network (2) being connected to the public network (4) via an access device (3), **characterised in that** the home control unit (1) cyclically transmits a presence message to the server (5) via the access device (3) and the connection existing via the latter between the local network (2) and the public network (4) or, in the event of an interruption, the connection re-established again by the home control unit (1) for this purpose, which message contains at least one identification feature uniquely identifying the home control unit (1), and **in that** a tunnel connection to the server (5) is established by the home control unit (1) for transmitting status information and/or for receiving commands, the home control unit (1) establishing this tunnel connection at the instigation of the server (5), via which, under a user account set up on the server (5) with assignment to the respective identification feature of the home control unit (1), external access to the home control unit (1) is provided by the server (5) transmitting, via the connection existing in association with the reception of the presence messages, a connection request to the home control unit (1) to establish the tunnel connection.

2. Method according to Claim 1, **characterised in that** the transmission of the presence message between the local network (2) and the public network (4) is effected via a wired connection.

3. Method according to Claim 2, **characterised in that**, in the event of an interruption of the wired connection and unsuccessful attempts of the home control unit (1) to re-establish a wired connection to be used for sending presence messages, an alternative connection is established by the home control unit (1) for sending a presence message.

4. Method according to Claim 3, **characterised in that**, in each case after the sending of a presence message or a predetermined number of presence messages via the alternative connection by the home control unit (1), for sending the next presence message a renewed attempt is made to establish a connection via the wired connection path primarily provided for this purpose.

5. Method according to Claim 3 or 4, **characterised in that** a UMTS connection or another wireless connection suitable for data transmission is established as the alternative connection for sending the presence message.

6. Method according to one of Claims 1 to 5, **characterised in that** the data exchanged between the home control unit (1) and the server (5) via the tunnel connection are transmitted, at least during a mutual authentication phase, using the SSL protocol or the TLS protocol.

7. Method according to Claim 1, **characterised in that** the MAC address of the home control unit (1) is used as identification feature and is transmitted to the server (5) via the connection existing between the local network (2) and the public network (4) via the access device (3).

8. Method according to Claim 1, **characterised in that** an identifier, which is stored in a memory module arranged in the home control unit (1) or to be inserted into it, is used as identification feature.

9. Method according to one of Claims 1 to 8, **characterised in that** access to the home control unit (1) is enabled, via the central server (5), also for other computer-based devices (12) not integrated into the local network (2) with the house control unit (1).

10. Arrangement with a home control unit (1) arranged in a non-public IP-based local network (2) and having a processing device and with a central server (5) arranged in an IP-based public network (4), the local network (2) being connected to the public network (4) via an access device (3) and the arrangement being configured for access, effected via the central server (5), to the home control unit (1) and electronic household appliances (7, 8, 9) operated at the latter, **characterised in that** the home control unit (1) is equipped with a program application held in a memory and processed by the processing device of said unit at least after setting an appropriate operating mode, which application cyclically transmits a presence message with an identification feature uniquely identifying the home control unit (1) to the server (5) and after reception of a corresponding connection request of the server (5) establishes a tunnel connection to the server (5) for transmitting status information and/or for receiving commands for the home control unit.

11. Arrangement according to Claim 10, **characterised in that** the home control unit (1) is virtualised on a computer-based terminal.

12. Arrangement according to Claim 10, **characterised in that** the virtual home control unit (1) is assigned its own IP address in the non-public local network (2).

13. Arrangement according to one of Claims 10 to 12, **characterised in that** in the home control unit (1) there is arranged a Trusted Platform Module, in which is stored the identification feature uniquely identifying the home control unit (1) and readable by the program application sending the presence messages.

14. Arrangement according to one of Claims 10 to 13, **characterised in that** the home control unit (1) has a UMTS module (10) addressable by the program application for sending the presence messages.

15. Arrangement according to Claim 10 or 11, **characterised in that** the central server (5) has a logging module (11) or is assigned such a module, in which status data, transmitted by or retrieved via the home control unit (1), of appliances (7, 8, 9) operated by the home control unit (1) are at least temporarily storable in log files with a record of the time of their logging.

## Revendications

1. Procédé pour permettre de manière durable l'accès externe à une unité de commande domestique (1) disposée dans un réseau local de type IP privé (2) par l'intermédiaire d'un serveur central (5) n'appartenant pas audit réseau (2) et disposé dans un réseau de type IP public (4), dans lequel le réseau local (2) est connecté par l'intermédiaire d'un dispositif d'accès (3) au réseau public (4), **caractérisé en ce que** l'unité de commande domestique (1) transmet de manière cyclique au serveur (5) par l'intermédiaire du dispositif d'accès (3) et de la connexion présente ou, dans le cas d'une interruption destinée à cet effet par l'unité de commande domestique (1), de la connexion rétablie à travers celle-ci entre le réseau local (2) et le réseau public (4), un message de présence, lequel message contient au moins une caractéristique d'identification identifiant de manière unique l'unité de commande domestique (1), et **en ce qu'**une connexion tunnel est établie avec le serveur (5) par l'intermédiaire de l'unité de commande domestique (1) pour transmettre des informations d'état et/ou pour recevoir des commandes, dans lequel l'unité de commande domestique (1) établit ladite connexion tunnel à la demande du serveur (5), connexion tunnel par l'intermédiaire de laquelle un accès est fourni à l'unité de commande domestique (1) sous un compte utilisateur établi sur le serveur (5) en conformité avec la caractéristique d'identification concernée de l'unité de commande domestique (1), en faisant en sorte que le serveur (5) transmette une demande de connexion par l'intermédiaire de la connexion établie en fonction de la réception de messages de présence pour établir la connexion tunnel à l'unité de commande domestique (1).

2. Procédé selon la revendication 1, **caractérisé en ce que** la transmission du message de présence entre le réseau local (2) et le réseau public (4) s'effectue par l'intermédiaire d'une connexion par ligne câblée.

3. Procédé selon la revendication 2, **caractérisé en ce que**, dans le cas d'une interruption de la connexion par ligne câblée et d'une tentative de rétablissement infructueuse par l'unité de commande domestique (1) d'une connexion par ligne câblée devant être utilisée pour l'émission de messages de présence, une autre connexion est établie par l'unité de commande domestique (1) pour émettre un message de présence.

4. Procédé selon la revendication 3, **caractérisé en ce que**, après l'émission d'un message de présence ou d'un nombre prédéterminé de messages de présence par l'intermédiaire de l'autre connexion, une nouvelle tentative d'établissement d'une connexion par l'intermédiaire du trajet de connexion par ligne câblée primaire prévu à cet effet est effectuée par l'unité de commande domestique (1) pour l'émission du message de présence suivant.

5. Procédé selon la revendication 3 ou 4, **caractérisé en ce qu'**une connexion UMTS ou une autre connexion radio permettant la transmission de données est établie en tant qu'autre connexion destinée à émettre le message de présence.

6. Procédé selon l'une quelconque des revendications 1 à 5, **caractérisé en ce que** les données échangées entre l'unité de commande domestique (1) et le serveur (5) par l'intermédiaire de la connexion tunnel sont transmises au moins pendant une phase d'authentification mutuelle en utilisant le protocole SSL ou le protocole TLS.

7. Procédé selon la revendication 1, **caractérisé en ce que** l'adresse MAC de l'unité de commande domestique (1) est utilisée en tant que caractéristiques d'identification et est transmise au serveur central (5) par l'intermédiaire de la connexion présente entre le réseau local (2) et le réseau public (4) au travers du dispositif d'accès (3).

8. Procédé selon la revendication 1, **caractérisé en ce qu'**un identifiant qui est stocké dans un module de mémoire prévu dans l'unité de commande domestique (1) ou devant être inséré dans celle-ci est utilisé en tant que caractéristique d'identification.

9. Procédé selon l'une quelconque des revendications 1 à 8, **caractérisé en ce que** l'accès à l'unité de commande domestique (1) est également rendu possible à l'unité de commande domestique (1) par l'intermédiaire du serveur central (5) à d'autres dispositifs informatiques (12) non intégrés dans le réseau local (2).

10. Dispositif comportant une unité de commande domestique (1) disposée dans un réseau local (2) de type IP privé, comprenant un dispositif de traitement, et comportant un serveur central (5) disposé dans un réseau de type IP public (4), dans lequel le réseau local (2) est connecté au réseau public (4) par l'intermédiaire d'un dispositif d'accès (3) et le dispositif est conçu pour permettre un accès, par l'intermédiaire du serveur central (5), à l'unité de commande domestique (1) et à des dispositifs domestiques électroniques (7, 8, 9) fonctionnant sur celle-ci, **caractérisé en ce que** l'unité de commande domestique (1) est munie d'une application logicielle contenue dans une mémoire et traitée par son dispositif de traitement, au moins après passage dans un mode de fonctionnement correspondant, laquelle application transmet de manière cyclique au serveur (5) un message de présence comportant une caractéristique d'identification caractérisant de manière unique l'unité de commande domestique (1) et, après réception d'une demande de connexion correspondante du serveur (5), établit une connexion tunnel vers le serveur (5) pour transmettre des informations d'état et/ou recevoir des commandes destinées à l'unité de commande domestique.

11. Dispositif selon la revendication 10, **caractérisé en ce que** l'unité de commande domestique (1) est virtualisée sur un terminal informatique.

12. Dispositif selon la revendication 10, **caractérisé en ce qu'**une adresse IP propre est attribuée à l'unité de commande domestique (1) virtuelle dans le réseau local privé (2).

13. Dispositif selon l'une quelconque des revendications 10 à 12, **caractérisé en ce qu'**il est prévu dans l'unité de commande domestique (1) un module de plateforme sécurisée sur lequel est stockée la caractéristique d'identification caractérisant de manière unique l'unité de commande domestique (1) et depuis lequel peut être lue l'application logicielle émettant les messages de présence.

14. Dispositif selon l'une quelconque des revendications 10 à 13, **caractérisé en ce que** l'unité de commande domestique (1) comprend un module UMTS (10) accessible par l'application logicielle pour l'émission des messages de présence.

15. Dispositif selon la revendication 10 ou 11, **caractérisé en ce que** le serveur central (5) comprend un module de connexion (11) ou **en ce qu'**un module de ce type lui est associé, module dans lequel des données d'état transmises par l'unité de commande domestique (1) ou demandées par l'intermédiaire de celle-ci, d'appareils (7, 8, 9) fonctionnant avec l'unité de commande domestique (1), peuvent être stockées au moins temporairement dans des fichiers journaux comportant des marqueurs temporels de leur acquisition.
